# FASCICULE DE BREVET EUROPEEN

(11) **EP 1 400 406 B1**
(45) Date de publication et mention de la délivrance du brevet: **17.01.2007**
(21) Numéro de dépôt: 03292271.8
(22) Date de dépôt: 15.09.2003
(51) Int. Cl.: B60Q 1/04

(54) **Projecteur de véhicule automobile comportant des moyens déformables propres à absorber au moins une partie de l'énergie d'un choc**
Kfz-Scheinwerfer mit verformbaren Mitteln zur Absorption mindestens eines Teils der Energie bei einem Aufprall
Vehicle headlamp with means that can be distorted to absorb at least part of the energy from a choc

(30) Priorité: 20.09.2002 FR 0211705
(43) Date de publication de la demande: 24.03.2004
(60) Demande divisionnaire: 06024685.7
(73) Titulaire: VALEO VISION, 93012 Bobigny Cédex (FR)
(72) Inventeur: Arlon, Philippe, c/o Valeo Vision, 93012 Bobigny Cedex (FR)
(74) Mandataire: Renous Chan, Véronique

(56) Documents cités:
- EP-A- 1 059 200
- EP-A- 1 120 309
- WO-A-00/07844
- DE-A- 10 101 789
- DE-A- 10 143 676
- FR-A- 2 781 736
- US-A1- 2001 040 811
- US-A1- 2001 046 140

## Description

La présente invention concerne un projecteur de véhicule automobile comportant un boîtier renfermant une source lumineuse et un réflecteur, ainsi qu'une glace de protection montée sur le boîtier et propre à transmettre la lumière émise par la source.

Les constructeurs ont depuis longtemps constaté que les projecteurs jouent, par leur localisation, un grand rôle dans la sécurité passive des véhicules automobiles, en particulier vis-à-vis des piétons, qui sont souvent victimes d'accidents de la route.

Au cours d'un choc piéton, il est fréquent que le piéton heurte un projecteur. Aussi certains constructeurs ont-ils décidé de doter les projecteurs de moyens d'absorption de l'énergie du choc. Un projecteur comportant des moyens d'absorption est présenté dans la demande de brevet européen publiée sous le numéro EP-1 059 200.

Toutefois, une telle dotation exige en général une révision en profondeur du projecteur. En particulier, des pièces supplémentaires sont nécessaires, telles que des pièces de guidage, ce qui présente des inconvénients en termes d'encombrement et de poids, et de coût.

Il s'avère également nécessaire de prévoir, autour du projecteur, des espaces vides pour permettre la déformation de celui-ci au cours du choc, ce qui grève encore l'encombrement du projecteur, tandis que les constructeurs privilégient par ailleurs la compacité du compartiment moteur.

Il est connu du document WO 00/07844 un système d'éclairage comportant un châssis apte à supporter au moins une lampe, un boîtier contenant le châssis et sa lampe et une pièce de structure du véhicule, le boîtier faisant partie intégrante de la pièce de structure. Il est connu des documents US 2001/004811 et US 2001/0046140un dispositif d'éclairage avec un composant flexible entre glace et boîtier. Il est connu du document DE 101 43 676 un projecteur dont la glace, sous l'effet d'un impact, est apte à glisser de façon télescopique par rapport au boîtier. Il est connu du document EP 1 120 309 un projecteur dont le boîtier a des zones de fragilité aptes à rompre en cas de choc.

L'invention vise notamment à pallier les inconvénients précités en proposant un projecteur qui, tout en assurant une sécurité passive optimale, notamment vis-à-vis des piétons, soit d'un encombrement relativement réduit, et comporte notamment un nombre de pièces limité. Subsidiairement, l'invention vise à trouver un projecteur assurant la sécurité optimale vis à vis des piétons, tout en limitant au maximum le nombre de pièces additionnels à ajouter, tout particulièrement hors du projecteur.

A cet effet, l'invention propose un projecteur de véhicule automobile selon les caractéristiques techniques de la revendication 1.

On limite ainsi le nombre de pièces fonctionnelles au sein du projecteur, au bénéfice de son encombrement et de son poids.

L'inertie du projecteur étant réduite, il en résulte une diminution des efforts subis par le piéton lors du choc.

En variante non protégée par le présent brevet, les moyens déformables forment au moins en partie un masque qui recouvre le bord avant du réflecteur.

Suivant un mode de réalisation, les moyens déformables sont réalisés dans un matériau compressible tel qu'une une mousse. Il s'agit par exemple d'un polypropylène expansé, qui, tout en étant léger, peut être aisément mis en forme et présente de bonnes capacités d'absorption d'énergie.

Les moyens déformables comportent, par exemple, au moins un élément annulaire ou à section en U ou en V, réalisé dans un matériau compressible et qui peut être disposé dans un logement complémentaire ménagé dans le boîtier. Ces moyens déformables peuvent être réalisés en une pièce ou en plusieurs pièces. Dans le cas où il y a plusieurs pièces, elles peuvent être jointives ou non, et être éventuellement sous forme de portions d'anneau ou d'élément en U ou en V.

En outre, la glace peut quant à elle comporter des moyens frangibles aptes à absorber au moins une partie de l'énergie du choc subi par le projecteur, ce qui accroît encore les capacités d'absorption d'énergie du projecteur.

Ainsi, suivant un mode de réalisation, la glace est munie d'une partie de raccordement au boîtier, qui comporte au moins une zone de rupture prédéterminée.

Cette partie de raccordement présente, par exemple, au moins deux parties raccordées par une ligne de moindre épaisseur, de préférence emboîtables après rupture de celle-ci.

L'invention sera mieux comprise à la lecture de la description qui va suivre, donnée uniquement à titre d'exemple et faite en référence aux dessins annexés dans lesquels :
- la figure 1 est une vue d'élévation en coupe d'un projecteur de véhicule automobile selon l'invention ;
- la figure 2 est une vue analogue à la figure 1, suivant une variante d'exécution non protégée par le présent brevet;
- la figure 3 est une vue en perspective d'un projecteur de véhicule automobile tel que représenté sur les figures 1 et 2, selon un mode de réalisation où il comporte une glace fusible ;
- la figure 4 est une vue schématique d'élévation en coupe du projecteur de la figure 3, où, pour des raisons de commodité, seuls sont représentés le boîtier et la glace du projecteur.

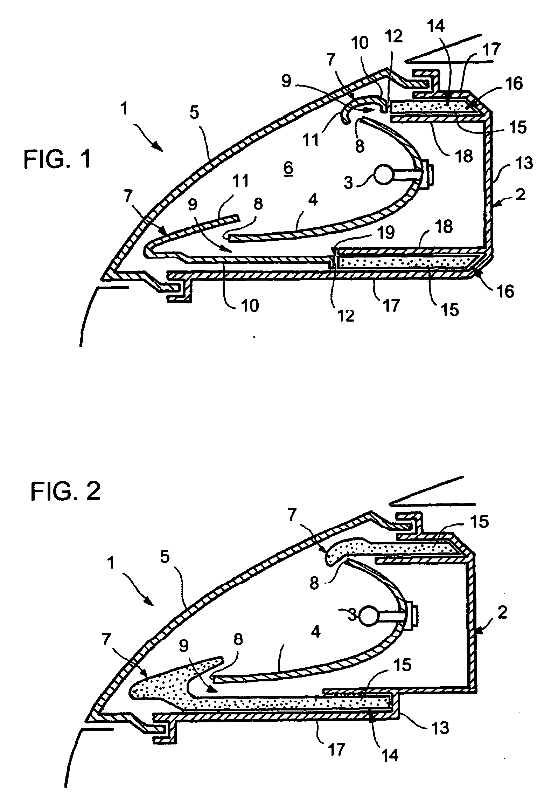

Sur la figure 1 est représenté un projecteur 1 de véhicule automobile comportant un boîtier 2 renfermant un certain nombre de composants internes, parmi lesquels une source lumineuse 3 et un réflecteur 4 sur lequel est montée la source 3 dont il réfléchit et diffuse la lumière.

Le projecteur 1 comporte également une glace 5 montée sur le boîtier 2, qu'elle referme à la manière d'un couvercle pour protéger les composants internes 3, 4 tout en transmettant la lumière émise par la source 3.

La glace 5 délimite, conjointement avec le boîtier 2, un volume interne 6 dans lequel sont disposés les composants internes 3, 4. Dans le volume interne 6 est également disposé un masque 7 annulaire qui vient recouvrir le bord avant 8 du réflecteur 4 pour combler visuellement l'espace 9 entre celui-ci et le boîtier 2, et ainsi améliorer l'esthétique du projecteur 1.

Comme on peut le voir sur la figure 1, le masque 7 comporte une portion externe annulaire 10 qui entoure le réflecteur 4, prolongée vers l'avant par une portion interne 11 sensiblement conique, recourbée vers l'arrière, qui chevauche le réflecteur 4. La portion externe 10 du masque 7 se termine, du côté opposé à la portion interne 11, par un bord arrière 12 tourné vers une paroi arrière 13 du boîtier 2.

De la sorte, outre son aspect décoratif, le masque 7, qui ne présente aucune arête tournée vers la glace 5, protège un piéton des coupures dont il pourrait être victime en venant heurter, lors d'un choc avec le projecteur 1, le bord avant 8 du réflecteur 4.

Afin d'optimiser la sécurité du piéton en cas de choc, le projecteur 1 comporte en outre des moyens déformables 14, interposés entre le masque 7 et le boîtier, et aptes à absorber au moins une partie de l'énergie d'un choc subi par le projecteur 1.

Plus précisément, tel que représenté sur la figure 1, ces moyens déformables 14 comportent un élément 15 réalisé dans un matériau compressible, qui s'étend entre le bord arrière 12 du masque 7 et la paroi arrière 13 du boîtier 2.

Les moyens déformables 14 comportent un unique élément 15 annulaire, monobloc, réalisé dans une mousse, par exemple une mousse de polyuréthane et//ou en polypropylène expansé, et disposé au moins en partie (ici complètement) dans un logement complémentaire 16 ménagé dans le boîtier 2.

Ce logement 16 est délimité, vers l'arrière, par la paroi arrière 13 du boîtier 2, vers l'extérieur, par une paroi externe 17 du boîtier et, vers l'intérieur, par une cloison 18 saillant de la paroi arrière 13 et concentrique à la paroi externe 17.

Le logement 16 présente vers l'avant une ouverture 19 tournée vers la glace 5. Le bord arrière 12 du masque est 7 placé en face et à proximité immédiate de cette ouverture 19, refermant ainsi le logement 16.

Lors d'un choc avec un obstacle, l'obstacle vient heurter la glace 5 qu'il repousse vers l'arrière. En se déformant, la glace 5 vient s'appuyer sur le masque 7 qui, en reculant, vient s'appuyer contre l'élément amortissant 15 qui se rétracte alors en absorbant une partie au moins de l'énergie du choc. On a donc une transmission de l'énergie du choc de la glace au masque puis du masque à l'élément amortissant. En l'occurrence, l'élément amortissant est guidé, lors de son recul, par son logement 16.

Le logement 16 est optionnel, la tenue de l'élément 15 pouvant être réalisée par son introduction à force dans le boîtier 2. L'élément 15 peut par exemple présenter une section en forme de U, ce qui peut suffire à assurer sa tenue dans le boîtier 2.

Par ailleurs, bien qu'un unique élément 15 soit ici prévu, il est envisageable d'en prévoir plusieurs, qui sont associés: par exemple en les superposant, ou en les disposant l'un derrière l'autre, ou côte à côte, notamment en fonction de l'espace disponible dans le projecteur 1.

La portion externe 10 du masque 7 pénètre alors dans le logement 16 où elle coulisse en repoussant l'élément compressible 15, le mouvement de recul du masque 7 étant ainsi guidé lors du choc.

La déformation du projecteur 1 est donc contrôlée, de sorte que, lors du choc, le masque 7 recouvre en permanence le bord avant 8 du réflecteur 4.

Suivant une variante d'exécution non protégée par le présent brevet, le masque 7 fait partie des moyens déformables 14. Ainsi, comme cela est représenté sur la figure 2, le masque 7 et l'élément compressible 15 ne forment qu'une seule et même pièce réalisée, dans un matériau compressible tel qu'une mousse de polyuréthane ou un polypropylène expansé, qui recouvre le bord avant 8 du réflecteur 4.

On peut aussi ne pas avoir de masque au sens habituel du terme.

Il en résulte une plus grande capacité d'absorption de l'énergie du choc, le masque 7 se déformant dans sa partie avant, dès que la glace 5 vient s'appuyer contre lui, puis dans sa partie arrière qui se trouve comprimée contre le boîtier 2.

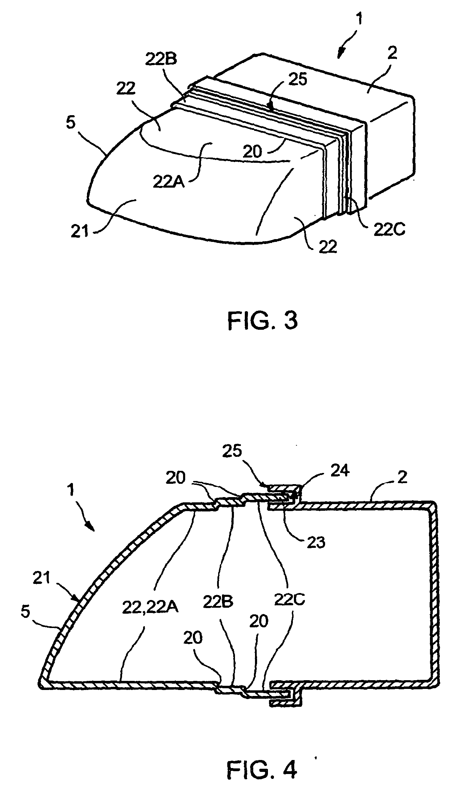

Par ailleurs, comme cela est représenté sur les figures 3 et 4, il est possible d'accroître la capacité d'absorption d'énergie du projecteur 1 à l'aide de moyens frangibles 20 prévus sur la glace 5, aptes à absorber, lors de leur rupture, au moins une partie de l'énergie d'un choc subi par le projecteur 1.

La glace 5 comporte une paroi avant 21, bordée latéralement par une tranche 22 par laquelle la glace 5 est raccordée au boîtier 2. Plus précisément, la tranche 22 présente, à l'opposé de la paroi avant 21, un bord arrière 23 reçu dans une rainure 24 formée sur un bord avant 25 du boîtier 2.

La tranche 22 de la glace 5 est déformable : elle comporte en effet au moins une zone de rupture prédéterminée formant les moyens frangibles 20 précités.

En pratique, la tranche 22 de la glace 5 comporte au moins deux parties gigognes 22A, 22B, raccordées par une ligne de moindre épaisseur 20. Selon un mode de réalisation représenté sur les figures 2 et 3, trois parties gigognes successives 22A, 22B, 22C sont prévues, reliées deux à deux par une ligne de moindre épaisseur 20.

Un choc frontal subi par le projecteur provoque le recul de la paroi avant 21, entraînant la rupture successive des lignes de moindre épaisseur 20, et l'emboîtement des parties gigognes 22A, 22B, 22C.

Etant guidée dans son recul, la glace 5 se déforme de manière prédéterminée. Il en résulte une répartition uniforme de l'effort qu'elle communique au masque 7 lorsqu'elle vient le heurter après avoir déjà avoir absorbé une partie de l'énergie du choc. L'élément compressible 15 s'enfonce alors à son tour, de la manière décrite ci-dessus, en complétant l'absorption d'énergie du choc.

## Revendications

1. Projecteur de véhicule automobile comportant un boîtier (2) renfermant une source lumineuse (3) et un réflecteur (4), une glace (5) de protection montée sur le boîtier (2) et propre à transmettre la lumière émise par la source (3), le projecteur comportant en outre des moyens (14) déformables interposés entre la glace (5) et le boîtier (2), aptes à absorber au moins une partie de l'énergie d'un choc subi par le projecteur (1), un masque (7) disposé dans le volume (6) délimité conjointement par le boîtier (2) et la glace (5), lesdits moyens déformables (14) étant interposés entre le masque (7) et le boîtier (2), le projecteur étant **caractérisé en ce que** lesdits moyens déformables (14) sont réalisés dans un matériau compressible, et **en ce que** lesdits moyens déformables (14) s'étendent entre le bord arrière (12) du masque (7) et la paroi arrière (13) du boîtier (2).

2. Projecteur selon la revendication 1, **caractérisé en ce que** les moyens déformables (14) sont réalisés dans une mousse.

3. Projecteur selon l'une des revendications précédentes, **caractérisé en ce que** les moyens déformables (14) sont réalisés dans un polypropylène expansé et/ou un polyuréthane.

4. Projecteur selon l'une des revendications précédentes, **caractérisé en ce que** les moyens déformables (14) comportent au moins un élément (15) annulaire ou à section en U, réalisé dans un matériau compressible.

5. Projecteur selon l'une des revendications précédentes, **caractérisé en ce que** les moyens déformables (14) sont réalisés en une ou plusieurs pièces, jointives ou non.

6. Projecteur selon l'une des revendications précédentes, **caractérisé en ce que** les moyens déformables (14) sont au moins en partie disposés dans un logement (16) complémentaire ménagé dans le boîtier (2).

7. Projecteur selon la revendication précédente, **caractérisé en ce que** le logement (16) complémentaire présente vers l'avant une ouverture (19) tournée vers la glace (5).

8. Projecteur selon la revendication précédente, **caractérisé en ce que** le bord arrière (12) du masque (7) est placé en face et à proximité de l'ouverture (19).

9. Projecteur selon l'une des revendications précédentes, **caractérisé en ce que** la glace (5) comporte des moyens frangibles (20) aptes à absorber au moins une partie de l'énergie du choc subi par le projecteur (1).

10. Projecteur selon l'une des revendications précédentes, **caractérisé en ce que** la glace (5) est munie d'une partie (22) de raccordement au boîtier (2), cette partie de raccordement (22) comportant au moins une zone (20) de rupture prédéterminée.

11. Projecteur selon la revendication précédente, **caractérisé en ce que** la partie de raccordement (22) de la glace (5) présente au moins deux parties (22A, 22B, 22C) raccordées par une ligne de moindre épaisseur (20), de préférence emboîtables après rupture de ladite ligne (20).

## Claims

1. A motor vehicle headlight, comprising a casing (2) which encloses a light source (3) and a reflector (4), a protective cover lens (5) mounted on the casing (2) and adapted to transmit the light emitted by the source (3), the headlight further including deformable means (14) which are interposed between the lens (5) and the casing (2), and which are adapted to absorb at least part of the energy from a shock applied to the headlight (1), and a bezel (7) which is disposed within the volume (6) delimited by the casing (2) and the lens (5) together, the said deformable means (14) being interposed between the bezel (7) and the casing (2), the headlight being **characterised in that** the said deformable means (14) are made of a compressible material, and **in that** the said deformable means (14) extend between the rear edge (12) of the bezel (7) and the rear wall (13) of the casing (2).

2. A headlight according to Claim 1, **characterised in that** the deformable means (14) are made of a foamed material.

3. A headlight according to one of the preceding Claims, **characterised in that** the deformable means (14) are made of an expanded polypropylene and/or a polyurethane.

4. A headlight according to one of the preceding Claims, **characterised in that** the deformable means (14) comprise at least one element (15) which is annular or of U-shaped cross section, it being made of a compressible material.

5. A headlight according to one of the preceding Claims, **characterised in that** the deformable means (14) are made in one or more pieces, which may or may not be joined together.

6. A headlight according to one of the preceding Claims, **characterised in that** the deformable means (14) are at least partly disposed in a complementary housing (16) which is formed in the casing (2).

7. A headlight according to the preceding Claim, **characterised in that** the complementary housing (16) has at the front an opening (19) which faces towards the cover lens (5).

8. A headlight according to the preceding Claim, **characterised in that** the rear edge (12) of the bezel (7) is placed facing and close to the opening (19).

9. A headlight according to one of the preceding Claims, **characterised in that** the cover lens (5) includes frangible means (20) which are adapted to absorb at least part of the energy from the shock suffered by the headlight (1).

10. A headlight according to one of the preceding Claims, **characterised in that** the cover lens (5) is provided with a junction portion (22) joining it to the casing (2), the said junction portion (22) including at least one zone (20) of predetermined rupture.

11. A headlight according to the preceding Claim, **characterised in that** the junction zone (22) of the cover lens (5) comprises at least two portions (22A, 22B, 22C) which are joined together by a line of reduced thickness (20), and which are preferably adapted to telescope together after the said line (20) is ruptured.

## Patentansprüche

1. Kraftfahrzeugscheinwerfer mit einem Gehäuse (2), das eine Lichtquelle (3) und einen Reflektor (4) umschließt, einer Schutzscheibe (5), die auf dem Gehäuse (2) angebracht ist und das von der Lichtquelle (3) ausgesandte Licht zu übertragen vermag, wobei der Scheinwerfer zudem zwischen der Scheibe (5) und dem Gehäuse (2) eingefügte verformbare Mittel (14) umfasst, die wenigstens einen Teil der Energie eines Stoßes auf den Scheinwerfer (1) aufzunehmen vermögen, sowie eine Abdeckung (7), die in dem vom Gehäuse (2) und der Scheibe (5) gemeinsam umgrenzten Raum (6) angeordnet ist, wobei die verformbaren Mittel (14) zwischen der Abdeckung (7) und dem Gehäuse (2) eingefügt sind,
wobei der Scheinwerfer **dadurch gekennzeichnet ist, dass** die verformbaren Mittel (14) aus einem komprimierbaren Material ausgeführt sind, und dass sich die verformbaren Mittel (14) zwischen dem hinteren Rand (12) der Abdeckung (7) und der Rückwand (13) des Gehäuses erstrecken.

2. Scheinwerfer nach Anspruch 1,
**dadurch gekennzeichnet, dass** die verformbaren Mittel (14) aus einem Schaumstoff ausgeführt sind.

3. Scheinwerfer nach einem der vorhergehenden Ansprüche,
**dadurch gekennzeichnet, dass** die verformbaren Mittel (14) aus expandiertem Polypropylen und/oder Polyurethan ausgeführt sind.

4. Scheinwerfer nach einem der vorhergehenden Ansprüche,
**dadurch gekennzeichnet, dass** die verformbaren Mittel (14) wenigstens ein Element (15) in Ringform oder mit U-förmigem Querschnitt aufweisen, das aus einem komprimierbaren Material ausgeführt ist.

5. Scheinwerfer nach einem der vorhergehenden Ansprüche,
**dadurch gekennzeichnet, dass** die verformbaren Mittel (14) aus einem oder mehreren aneinander stoßenden oder nicht aneinander stoßenden Stücken ausgeführt sind.

6. Scheinwerfer nach einem der vorhergehenden Ansprüche,
**dadurch gekennzeichnet, dass** die verformbaren Mittel (14) wenigstens zum Teil in einer in dem Gehäuse (2) ausgeführten komplementären Aufnahme (16) angeordnet sind.

7. Scheinwerfer nach dem vorhergehenden Anspruch,
**dadurch gekennzeichnet, dass** die komplementäre Aufnahme (16) vorne eine zur Scheibe (5) gewandte Öffnung (19) aufweist.

8. Scheinwerfer nach dem vorhergehenden Anspruch,
**dadurch gekennzeichnet, dass** der hintere Rand (12) der Abdeckung (7) der Öffnung (19) gegenüber liegend und in deren Nähe angeordnet ist.

9. Scheinwerfer nach einem der vorhergehenden Ansprüche,
**dadurch gekennzeichnet, dass** die Scheibe (5) zerbrechbare Mittel (20) aufweist, die wenigstens einen Teil der Energie des Stoßes auf den Scheinwerfer (1) aufzunehmen vermögen.

10. Scheinwerfer nach einem der vorhergehenden Ansprüche,
**dadurch gekennzeichnet, dass** die Scheibe (5) mit einem Stück (22) zum Verbinden mit dem Gehäuse (2) versehen ist, wobei dieses Verbindungsstück (22) wenigstens einen vorbestimmten Bruchbereich (20) aufweist.

11. Scheinwerfer nach dem vorhergehenden Anspruch,
**dadurch gekennzeichnet, dass** das Verbindungsstück (22) der Scheibe (5) wenigstens zwei Teile (22A, 22B, 22C) aufweist, die durch eine Linie (20) geringerer Dicke miteinander verbunden sind und nach Bruch dieser Linie (20) vorzugsweise zusammenschiebbar sind.
